# EUROPÄISCHE PATENTSCHRIFT

(11) **EP 0 633 913 B1**
(45) Veröffentlichungstag und Bekanntmachung des Hinweises auf die Patenterteilung: **02.01.1997**
(21) Anmeldenummer: 93908852.2
(22) Anmeldetag: 25.03.1993
(51) Int. Cl.: C09D 7/00

(54) **ENDGRUPPENVERSCHLOSSENE ALKYLPOLYETHYLENGLYCOLETHER ALS ZUSATZ ZU KOAGULIERUNGSMITTELN**
END GROUP CLOSED ALKYLPOLYETHYLENE GLYCOL ETHERS AS ADDITIVES TO COAGULANTS
GLYCOLETHERS DE POLYETHYLENE D'ALKYLE A GROUPES TERMINAUX FERMES UTILES COMME ADDITIFS DE COAGULANTS

(30) Priorität: 03.04.1992 DE 4211206
(43) Veröffentlichungstag der Anmeldung: 18.01.1995
(73) Patentinhaber: Henkel Kommanditgesellschaft auf Aktien, 40191 Düsseldorf (DE)
(72) Erfinder: GEKE, Jürgen, D-4000 Düsseldorf (DE); MARGEIT, Ragnar, D-4100 Duisburg 14 (DE); POLY, Wolfgang, D-4000 Düsseldorf 13 (DE)
(86) Internationale Anmeldenummer: EP9300729
(87) Internationale Veröffentlichungsnummer: WO9320157

(56) Entgegenhaltungen:
- US-A- 3 429 823
- US-A- 4 002 490
- US-A- 4 090 001

## Beschreibung

Die Erfindung betrifft die Verwendung von endgruppenverschlossenen Alkylpolyethylenglykolethern als sedimentierender Zusatz zu Koagulierungsmitteln für Lacke, Wachse und andere Beschichtungsmaterialien in Umlaufwässern für Lackspritzkabinen.

Bei der Aufbringung von Lacken, Wachsen oder ähnlichen, nicht wasserlösliche organische Substanzen enthaltenden Beschichtungsmaterialien, z.B. in der Automobilindustrie, gelingt es nicht, die Materialien restlos auf die zu beschichtenden Teile aufzubringen. Speziell bei der Lackierung von Kraftfahrzeugen fällt in den Lackspritzkabinen sogenannter "Overspray" an, der mittels Wasser aus den Lackspritzkabinen entfernt und in ein sogenanntes Beruhigungsbecken gespült wird. Um einerseits die Funktion der wasserführenden Leitungs-, Düsen- und Berieselungssysteme durch z.B. klebende Lackpartikel nicht zu stören und andererseits das umlaufende Wasser von den aufgenommenen Inhaltsstoffen zu entsorgen, müssen zur Koagulierung der genannten Stoffe dem Umlaufwasser Chemikalien, Koagulierungsmittel genannt, zugegeben werden. Dabei sollte die Entklebung der verspritzten und vom Wasser aufgenommenen Lackpartikel und deren Agglomeration zu einem austragungsfähigen Koagulat in einem Arbeitsgang erfolgen.

Je nach den technisch vorhandenen Anlagen wird entweder ein Lackkoagulierungsmittel verwendet, durch das das Lackkoagulat im Beruhigungsbecken flotiert, d.h. aufschwimmt, was ein Abschöpfen des Koagulats von der Wasseroberfläche ermöglicht, oder eines, durch das das Koagulat sedimentiert, wonach es mittels eines Kratzbandes vom Beckenboden abgeräumt wird.

Zur Koagulierung herkömmlicher, vor allem in der Automobilindustrie verwendeter Lacke stehen eine Reihe neutraler und alkalischer Produkte zur Verfügung. Um Koagulierung, d.h. Entklebung der Lackpartikel und deren Agglomeration zu einem austragungsfähigen Koagulat, zu erreichen, wurden dem umlaufenden Wasser bisher alkalische pulverförmige und alkalische flüssige Produkte sowie pulverförmige neutrale Produkte zugesetzt.

So werden in der GB-A-1 512 022 flockulierende, d.h. den Zusammenschluß von Teilchen unter Einwirkung intermolekular brückenbildender Makromoleküle bewirkende Agentien beschrieben. Diese setzen sich zusammen aus als Klärmittel wirkenden anorganischen Metallsalzen wie Eisen(II)chlorid oder Aluminiumsulfat, und organischen kationischen Polymeren wie Polyvinylpyridin oder Polyaminen in wäßriger Lösung.

Zusatzmittel zu Spülflüssigkeiten zur Koagulierung von Lack- und Grundiermitteln werden in der DE-A-15 17 409 offenbart. Sie enthalten wasserlösliche Alkali- und/ oder Erdalkalimetallsalze, schwer wasserlösliche Hydroxide mehrwertiger Metalle, wie Magnesium, Eisen, Aluminium oder Chrom, sowie aliphatische oder cycloaliphatische Amine. Lackentklebungs- und Sedimentationsmittel, die aliphatische Carbonsäuren mit 12 oder mehr C-Atomen oder deren Alkali-, Ammonium- oder Alkanolaminsalze sowie schaumdämpfend wirkende Stoffe enthalten, werden in der DE-B-23 47 068 beschrieben. Wäßrige Lösungen zur Entaktivierung von Overspray, die Alkalien und organische Amine bzw. Alkanolamine mit Organylgruppen mit 2 bis 10 C-Atomen enthalten, werden in der DE-A-20 06 008 beschrieben.

Alkanolamine, die zusammen mit Metallsalzen und Polyetherpolyaminen in wäßriger Lösung zur Entklebung von Lackspray-Partikelchen und zur Reinigung der Umlaufwässer in Lackspritzkabinen enthalten sind, werden auch in der US-A-39 90 986 offenbart.

Aus der DE-A-34 12 763 sind Koagulierungsmitel für Lacke und organische Beschichtungsmittel, insbesondere für Zweikomponenten-Polyurethanlacke, bekannt, die eine Mischung aus Cyanamid, Dicyandiamid und/oder Calciumcyanamid in Verbindung mit Polyethyleniminen und weiteren Koagulationshilfsstoffen enthalten.

Die DE-A-38 10 166 beschreibt die Verwendung eines wäßrigen Konzentrates, welches 2 bis 25 Gew.-% eines Ethylen-Acrylsäure-Copolymerisats enthält, das 8 bis 25 Gew.-% Acrylsäureeinheiten und 92 bis 75 Gew.-% Ethyleneinheiten, bezogen auf die Säureform des Copolymerisats, aufweist und als Salz einer anorganischen oder organischen Base vorliegt, zur Koagulation von Lacken.

Die in der Literatur beschriebenen Koagulationsformulierungen sind oft nicht zur Sedimentation der gewonnenen Koagulate geeignet, so daß, sofern eine Sedimentation gewünscht ist, bestimmte Koagulationsmittel eingesetzt werden müssen, die gleichzeitig bewirken, daß das Koagulationsgut sedimentiert.

Erstrebenswert ist in jedem Falle eine vollständige Sedimentation des Koagulationsgutes. Neben einer vollständigen Sedimentation sollte der Zusatz eines Sedimentationsmittels ferner das Sedimentationsgut nicht in unerwünschter Weise verkleben. Diese unerwünschte Verklebung des sedimentierten Koagulates sollte auch bei höheren Konzentrationen des Sedimentationszusatzes unterbleiben.

Ein weiteres zu lösendes Problem ist bei den Sedimentationshilfsmitteln des Standes der Technik eine oftmals auftretende Schaumbildung, die durch Einsatz zusätzlicher Antischaummittel unterbunden werden muß. Gleichzeitig führt dieser Schaum zu zusätzlichen Verklebungsproblemen beim Koagulationsgut.

Ein weiterer wichtiger Aspekt der vorliegenden Erfindung ist die Verbesserung der Konfektionierbarkeit in flüssigen Formulierungen.

Überraschend wurde gefunden, daß die erfindungsgemäßen Sedimentationszusätze zu Koagulierungsmitteln eine vollständige Sedimentation bewirken, ohne daß eine Verklebung des Koagulationsgutes auftritt. Dabei unterbleibt die Verklebung des Koagulationsgutes auch bei Anteilen des Sedimentationszusatzes von bis zu 10 Gew.-%.

Durch den Einsatz der erfindungsgemäßen Sedimentationszusätze kann die Verwendung von zusätzlichen Antischaummitteln unterbleiben, da die Sedimentationszusätze gemäß der Erfindung nicht zur Schaumbildung führen, diese sogar unterdrücken. Die erfindungsgemäßen Sedimentationszusätze sind ferner ohne weiteres mit flüssigen oder festen, pulverförmigen Koagulationsmittel-Formulierungen konfektionierbar.

Gegenstand der vorliegenden Erfindung ist dementsprechend die Verwendung von endgruppenverschlossenen Alkylpolyethylenglykolethern der allgemeinen Formeln (I) und (II)

R₁-O-(CH₂CH₂O)_{5,4}-R₂ (I)

R₃-O-(CH₂CH₂O)_{3,2}-R₂ (II)

mit
- R₁: = geradkettiger oder verzweigter Alkylrest mit 10 C-Atomen,
- R₂: = geradkettiger Alkylrest mit 4 C-Atomen,
- R₃: = geradkettiger oder verzweigter Alkylrest mit 20 C-Atomen,
und wobei die für die Ethylenoxideinheiten angegebenen Indices Dezimalwerte darstellen, einzeln oder im Gemisch als sedimentierender Zusatz zu Koagulierungsmitteln für Lacke, Wachse und andere Beschichtungsmittel in Umlaufwässern für Lackspritzkabinen, wobei die Alkylpolyethylenglykolether in Mengen von 1 bis 10 Gew.-%, bezogen auf die Gesamtzusammensetzung der Koagulierungsmittel, eingesetzt werden.

Im Sinne der vorliegenden Erfindung ist es bevorzugt, solche Alkylpolyethylenglykolether zu verwenden, die als Rest R₁ in der allgemeinen Formel (I) einen geradkettigen Alkylrest mit 10 C-Atomen und als Rest R₃ in der allgemeinen Formel (II) einen verzweigten Alkylrest mit 20 C-Atomen, insbesondere einen 2-0ctyl-dodecylrest, aufweisen. Bezüglich der Anzahl der Ethylenoxideinheiten in diesen Alkylpolyethylenglykolethern sei erwähnt, daß es sich bei den angegebenen Werten - 5,4 gemäß Formel (I) und 3,2 gemäß Formel (II) - um statistische Mittelwerte handelt, wobei sich diese Mittelwerte in gleicher Weise sowohl auf eine breite Homologenverteilung als auch auf eine enge Homologenverteilung, beispielsweise gemäß DE-A-38 43 713, beziehen.

Erfindungsgemäß ist es ferner bevorzugt, daß man die genannten Alkylpolyethylenglykolether in Mengen von 3 bis 7 Gew.-%, bezogen auf die Gesamtzusammensetzung der eingesetzten Koagulierungsmittel, verwendet. Hierbei können die Alkylpolyethylenglykolether sowohl gemeinsam mit den Koagulierungsmitteln als auch getrennt von diesen den Umlaufwässern zugesetzt werden.

Wie bereits gesagt, können die Alkylpolyethylenglykolether entweder einzeln oder als Gemisch für den vorgesehenen Verwendungszweck eingesetzt werden. Sofern ein Gemisch der beiden Alkylpolyethylenglykolether Verwendung findet, so bestehen hinsichtlich des Mischungsverhältnisses im Prinzip keine Beschränkungen. Erfindungsgemäß ist jedoch ein Mischungsverhältnis im Bereich von 10:1 bis 1:10, insbesondere von 1:1, bevorzugt.

Im Vergleich zu anderen Alkylpolyethylenglykolethern führt überraschenderweise gerade die gezielte Auswahl der erfindungsgemäß zu verwendenden Alkylpolyethylenglykolether zu den vorstehend geschilderten guten Ergebnissen.

Übliche Formulierungen zur Koagulation von Lacken, Wachsen und anderen Beschichtungsmaterialien mit welchen die erfindungsgemäße Verwendung der Sedimentationszusätze erfolgen kann, können je nach Anwendungsgebiet aus verschiedenen im Stand der Technik bekannten Koagulationswirkstoffen und/oder Koagulationshilfsstoffen in wechselnder Zusammensetzung bestehen.

Bekannte Koagulationswirkstoffe sind insbesondere die in der DE-A-38 10 166 beschriebenen Ethylen-Acrylsäure-Copolymerisate, welche als 2 bis 25 Gew.-%ige wäßrige Konzentrate eingesetzt werden. Das Ethylen-Acrylsäure-Copolymerisat selbst besteht aus 8 bis 25 Gew.-% Acrylsäureeinheiten und 92 bis 75 Gew.-% Ethyleneinheiten, bezogen auf die Säureform des Copolymerisats und liegt als Salz einer anorganischen oder organischen Base vor.

Die in der EP-A-0 201 702 beschriebenen Ethylen-Acrylsäurecopolymerisate, deren Carboxylgruppen zu 50 bis 100 Mol-% neutralisiert sind, kommen ebenfalls in Betracht.

Die erfindungsgemäße Verwendung der endgruppenverschlossenen Alkylpolyethylenglykolether kann ebenfalls zusammen mit Koagulierungsmitteln erfolgen, die eine Mischung von Cyanamid und/oder Dicyandiamid und/oder Calciumcyanamid enthalten. Derartige Koagulierungsmittel sind in der DE-A-34 12 763 beschrieben.

Es sind auch Mittel zur Koagulation bekannt, die aus Wachsen und Alkanolaminen bestehen (DE-A-34 21 289 und DE-C-27 58 873).

Die Koagulationsmittel können ferner Alumosilikat-Komponenten (Mineralien aus der Gruppe Beidellit, Bentonit, Bolüs, Dickit, Halloysit, Hectorit, Kaolinit etc.) enthalten, vergleiche beispielsweise US-A-4 220 456, US-A-4 629 572, US-A-4 380 495, US-A-4 701 220 oder EP-B-193 558. Die Koagulationsmittel können ferner aus Gemischen einzelner zur Koagulation geeigneter Komponenten bestehen und Zusätze von Kieselsäure oder deren Alkali- oder Erdalkalisalze, weitere Erdalkalisalze (DE-A-15 17 409) oder protonierte oder kationische modifizierte Polyethylenimine (DE-A-33 16 878) enthalten.

Die Koagulationsmittel können ebenfalls Calcium und/oder Magnesiumnitrate, Chloride und/oder Sulfate (DE-A-33 16 878) sowie Molybdänverbindungen (DE-A-40 25 729) enthalten.

Die Anwesenheit üblicher Verdickungs-, Solubilisierungs- und Antischaummittel und Reagenzien zur Regulierung des pH-Wertes der Koagulationsmittel stören die Wirkungsweise der endgruppenverschlossenen Alkylpolyethylenglykolether in ihrer Anwendung nicht.

Ebenso können übliche Biozide und/oder Korrosionsinhibitoren in den Koagulationsmitteln enthalten sein.

Die nachfolgenden Beispiele dienen der Beschreibung der Erfindung.

### Beispiele

Als Alkylpolyethylenglykolether wurden in den nachstehenden Beispielen eingesetzt:
- Mischether (a): gemäß Formel (I) mit R₁ = n-C₁₀-Alkylrest, d.h. n-Decyl-(E0)_{5,4}-n-butylether;
- Mischether (b): gemäß Formel (II) mit R₃ = 2-Octyl-dodecylrest, d.h. 2-Octyl-dodecyl-(E0)_{3,2}-n-butylether
(E0 = Ethylenoxideinheiten).

### Beispiel 1: Pulverförmiges Koagulierungsmittel

- 2 Gew.-%: Na-molybdat
- 8 Gew.-%: Dicyandiamid
- 85 Gew.-%: Bentonit
- 5 Gew.-%: Mischether (a)

### Beispiel 2: Flüssiges Koagulierungsmittel

- 2 Gew.-%: Na-molybdat
- 40 Gew.-%: Ethylen-acrylsäure-copolymerisat
- 2 Gew.-%: Dicyandiamid
- 3 Gew.-%: Mischether (b)
- 5 Gew.-%: Verdickungsmittel Plex 4989 L (Fa. Röhm + Haas; wäßrige Lösung eines Acrylharzes)
- 48 Gew.-%: Wasser

### Vergleichsformulierungen ohne Mischether

### Beispiel 3:

- 2 Gew.-%: Na-molybdat
- 8 Gew.-%: Dicyandiamid
- 90 Gew.-%: Bentonit

### Beispiel 4:

- 2 Gew.-%: Na-molybdat
- 40 Gew.-%: Ethylen-acrylsäure-copolymerisat
- 2 Gew.-%: Dicyandiamid
- 5 Gew.-%: Verdickungsmittel Plex 4989 L
- 51 Gew.-%: Wasser

Die Koagulierungswirksamkeit wurde an folgenden Lacken überprüft:
- Einbrenn-Decklack, magmarot, Fa. Herberts
- Einbrenn-Decklack, casablancaweiß, Fa. Herberts

### Bewertungsskala für die Lackkoagulierung:

- K1: = entklebt
- K2: = austragfähig (Oberfläche entklebt, innen noch klebrig)
- K3: = nicht entklebt

### Aussehen des Koagulates:

- A1: = feindispers
- A2: = mitteldispers
- A3: = grobdispers
- A4: = Klumpen

### Absetzverhalten:

- Sed.: = Sedimentation
- Flot.: = Flotation

### Ergebnis:

**Tabelle**

| Lack | Koaguliermittel | Koagulierung | Aussehen | Absetzv. |
|---|---|---|---|---|
| Decklack | Bsp. 1 | K1 | A1 | Sed. |
| magmarot | Bsp. 2 | K1 | A1 | Sed. |
| | Bsp. 3 | K1 | A1/2 | Flot. |
| | Bsp. 4 | K1 | A1/2 | Flot. |
| Deckblack | Bsp. 1 | K1 | A1 | Sed. |
| casablancaweiß | Bsp. 2 | K1 | A1 | Sed. |
| | Bsp. 3 | K1 | A1/2 | Flot. |
| | Bsp. 4 | K1 | A1/2 | Flot. |

Die Art der Dosierung und die jeweiligen Mengen richten sich nach der Konfektionsart des jeweiligen Koagulierungsmittels (Pulver oder Flüssigkeit), dem Volumen des Umlaufwassers und/oder dem Lackoverspray und ist im Stand der Technik bekannt (z.B. DE-A-34 12 763 oder DE-A-38 10 166).

## Patentansprüche

1. Verwendung von endgruppenverschlossenen Alkylpolyethylenglykolethern der allgemeinen Formeln (I) und (II)
R₁-O-(CH₂CH₂O)_{5,4}-R₂ (I)
R₃-O-(CH₂CH₂O)_{3,2}-R₂ (II)
mit
R₁ = geradkettiger oder verzweigter Alkylrest mit 10 C-Atomen,
R₂ = geradkettiger Alkylrest mit 4 C-Atomen,
R₃ = geradkettiger oder verzweigter Alkylrest mit 20 C-Atomen,
und wobei die für die Ethylenoxideinheiten angegebenen Indices Dezimalwerte darstellen, einzeln oder im Gemisch als sedimentierender Zusatz zu Koagulierungsmitteln für Lacke, Wachse und andere Beschichtungsmittel in Umlaufwässern für Lackspritzkabinen, wobei die Alkylpolyethylenglykolether in Mengen von 1 bis 10 Gew.-%, bezogen auf die Gesamtzusammensetzung der Koagulierungsmittel, eingesetzt werden.

2. Verwendung nach Anspruch 1, dadurch gekennzeichnet, daß
R₁ für einen geradkettigen Alkylrest mit 10 C-Atomen und
R₂ für einen verzweigten Alkylrest mit 20 C-Atomen, vorzugsweise für einen 2-Octyldodecylrest, steht.

3. Verwendung nach Anspruch 1 oder 2, dadurch gekennzeichnet, daß man die Alkylpolyethylenglykolether in Mengen von 3 bis 7 Gew.-%, bezogen auf die Gesamtzusammensetzung der eingesetzten Koagulierungsmittel, verwendet.

4. Verwendung nach einem oder mehreren der Ansprüche 1 bis 3, dadurch gekennzeichnet, daß man die Alkylpolyethylenglykolether entweder gemeinsam mit den Koagulierungsmitteln oder getrennt von diesen den Umlaufwässern zusetzt.

5. Verwendung nach einem oder mehreren der Ansprüche 1 bis 4, dadurch gekennzeichnet, daß man ein Gemisch der Alkylpolyethylenglykolether der allgemeinen Formel (I) und (II) verwendet, wobei das Mischungsverhältnis im Bereich von 10:1 bis 1:10, insbesondere 1:1, liegt.

## Claims

1. The use of end-capped alkyl polyethylene glycol ethers corresponding to the general formulae (I) and (II)
R₁-O-(CH₂CH₂O)_{5.4}-R₂ (I)
R₃-O-(CH₂CH₂O)_{3.2}-R₂ (II)
where
R₁ = straight-chain or branched alkyl radical having 10 carbon atoms,
R₂ = straight-chain alkyl radical having 4 carbon atoms,
R₃ = straight-chain or branched alkyl radical having 20 carbon atoms,
and where the indices given for the ethylene oxide units represent decimal values,
individually or in mixture as a sedimenting additive for coagulants for lacquers, waxes and other coating agents in circuit waters for lacquer spraying booths, the alkyl polyethylene glycol ethers being used in quantities of from 1 to 10 wt.%, based on the total composition of the coagulants.

2. The use according to claim 1, characterised in that
R₁ stands for a straight-chain alkyl radical having 10 carbon atoms, and
R₂ stands for a branched alkyl radical having 20 carbon atoms, preferably a 2-octyl dodecyl radical.

3. The use according to claim 1 or 2, characterised in that the alkyl polyethylene glycol ethers are used in quantities of from 3 to 7 wt.%, based on the total composition of the coagulants used.

4. The use according to one or more of claims 1 to 3, characterised in that the alkyl polyethylene glycol ethers are added to the circuit waters either together with or separately from the coagulants.

5. The use according to one or more of claims 1 to 4, characterised in that a mixture of the alkyl polyethylene glycol ethers corresponding to the general formulae (I) and (II) is used, the mixing ratio being in the region of from 10:1 to 1:10, particularly 1:1.

## Revendications

1. Utilisation de polyéthylèneglycoléthers d'alkyle comportant des groupes terminaux de fermeture,des formules générales (I) et (II)
R₁-O-(CH₂CH₂O)_{5,4}-R₂ (I)
R₃-O-(CH₂CH₂O)_{3,2}-R₂ (II)
dans lesquelles
R₁ = un radical alkyle à chaîne droite ou ramifiée comportant 10 atomes de C,
R₂ = un radical alkyle à chaîne droite possédant 4 atomes de C,
R₃ = un radical alkyle à chaîne droite ou ramifiée comportant 20 atomes de C,
et dans lesquelles les indices spécifiés pour les unités d'oxyde d'éthylène représentent des valeurs décimales,
seuls ou en mélange comme additif de sédimentation de coagulants pour les laques, cires et autres agents d'enduction, dans les eaux de circulation pour les cabines de pistolage, les polyéthylèneglycoléthers d'alkyle étant mis en oeuvre en proportions de 1 à 10 % en poids, par rapport à la composition totale du coagulant.

2. Utilisation selon la revendication 1, caractérisée en ce que R₁ représente un radical alkyle à chaîne droite comportant 10 atomes et R₂ correspond à un radical alkyle ramifié possédant 20 atomes de C, de préférence un radical 2-octyl-dodécyle.

3. Utilisation selon la revendication 1 ou 2, caractérisée en ce que l'on met en oeuvre les polyéthylèneglycoléthers d'alkyle en proportions de 3 à 7 % en poids, par rapport à la composition totale des coagulants utilisés.

4. Utilisation selon une ou plusieurs des revendications 1 à 3, caractérisée en ce que l'on ajoute les polyéthylèneglycoléthers d'alkyle aux eaux de circulation, soit conjointement avec les coagulants, soit séparément de ceux-ci.

5. Utilisation selon une ou plusieurs des revendications 1 à 4, caractérisée en ce que l'on met en oeuvre un mélange des polyéthylèneglycoléthers d'alkyle des formules générales (I) et (II), le rapport de mélange étant compris dans l'intervalle de 10:1 à 1:10, en particulier de 1:1.
